# EUROPEAN PATENT SPECIFICATION

(11) **EP 2 317 158 B1**
(45) Date of publication and mention of the grant of the patent: **11.12.2013**
(21) Application number: 10188643.0
(22) Date of filing: 25.10.2010
(51) Int. Cl.: F16B 13/14

(54) **Wall plug for masonry walls provided with insulating layers of friable spongy materials**
Wanddübel für mauerwerkswände mit dämmschichten aus krümeligen porösen
Prise murale pour murs de maçonnerie avec des couches isolantes de matériaux spongieux friables

(30) Priority: 27.10.2009 IT MC20090221
(43) Date of publication of application: 04.05.2011
(73) Proprietor: I.Quattro S.r.l., 60030 San Marcello (AN) (IT)
(72) Inventor: Cirilli, Alessandro, 60035 Jesi (IT)
(74) Representative: Baldi, Claudio

(56) References cited:
- US-A- 3 255 658
- US-A1- 2005 097 849

## Description

The present patent application for industrial invention relates to a wall plug for installation on masonry walls provided with insulating layers of friable spongy materials behind the plaster.

Wall plugs are largely used, in cooperation with expandable plugs, on masonry walls to hang furniture articles, pictures, shutter-holding hooks, lamp-holding arms and similar.

In recent years such a traditional technology has evolved in order to permit application also on masonry walls provided with a thick insulating layer made of friable spongy materials immediately behind the front surface.

However, it must be noted that each plug can be a good holding point for all articles to be hung by being simply inserted in a firm, strong way inside a sufficiently strong wall.

Whereas masonry walls guarantee such cooperation with a traditional wall plug, it is evident that such an expectation would be totally disregarded if such a wall plug was directly fixed on the non-resistant insulating layer that is sometimes situated between masonry walls and surface plaster.

In view of the above, and especially in view of the larger and larger use of walls provided with insulating layers, wall plugs with specific construction have been recently provided.

The latter are provided with a threaded stem with considerable length that exceeds the standard width of a layer of insulating material.

The fixing of such a wall plug requires the drilling of a hole through the installation wall, entirely crossing the insulating layer and reaching the surface of the masonry structure behind it.

Once the drilling operation is completed a traditional expansion plug is inserted inside the hole, making sure to place it on the bottom of the hole, in correspondence with the part of hole drilled in the resistant masonry structure.

Then the threaded stem of the plug is inserted into the hole, in such a way that the point of the stem "engages" in the expansion plug that has been already inserted into the masonry structure.

In other words, the plug directly wedges on the masonry structure of the wall and not on the friable soft insulating material.

It must be noted that according to such a traditional technology a conical insert made of plastic materials is screwed along the threaded stem of such a plug, in proximity of the back end, which remains fitted inside the insulating layer of the wall once the installation of the entire wall plug is completed.

The function of such an insert is to create a thermal barrier to avoid the heat dispersion from inside to outside of the building that could easily generated due to the fact that the threaded stem by-passes the insulating layer because of its considerable length.

US 2005/097849 discloses a wall plug with cylindrical stem provided with a plurality of holes. Such a plug is characterized by poor insulating properties.

The specific purpose of the present invention is to introduce an alternative technology that provides a more practical, more rapid and less expensive installation mode with the same efficacy level.

Within the scope of the present invention the wall plug of the invention can be installed without the cooperation of the expansion plug and therefore without being screwed to the installation wall.

Of course, also in such a case, installation requires the drilling of a hole that passes through the insulating layer of the wall and reaches the masonry structure behind it.

Nevertheless, in such a case it is sufficient to inject a suitable amount of chemical anchoring agent (actually a sort of fluid gluing resin) into said hole. Then the new wall plug of the invention is inserted into said hole, waiting for the anchoring agent to set, incorporating and fixing it rigidly in the bearing masonry structure.

It must be noted that such a wall plug is covered at the back end with a rigid sheath of plastic materials adapted to be placed inside the insulating material of the installation wall once the installation of the wall plug has been completed.

It is easy to understand that such a position of said sheath of plastic materials creates a thermal barrier along the bearing metal rod and eliminates dangerous heat losses through the hole that houses the rod and passes through the insulating layer.

In correspondence with the back end of the sheath, meaning the one designed to remain visible on the plaster of the installation wall, a central hole is provided and used to fix screws to fix and support the articles to be hung to the newly conceived wall plug.

For purposes of clarity, the description of the invention continues with reference to the enclosed drawings, which are intended for purposes of illustration only and not in a limiting sense, wherein:

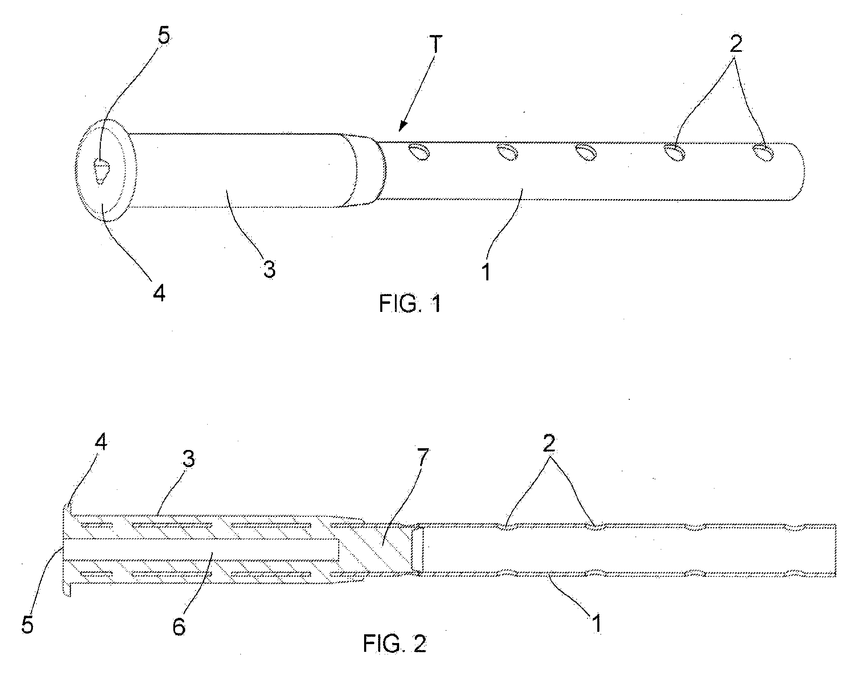

- figure 1 is an axonometric view of the new wall plug of the invention;
- Figure 2 is a cross-sectional view of the same wall plug with a longitudinal median plane;
- figure 3 is a diagrammatic cross-sectional view of a wall plug of the invention in operating position in the installation wall made of a solid wall in this case;
- figure 4 is the same as fig. 3, except for it refers to a different installation mode of the wall plug of the invention in a cavity wall.

Referring to said figures, the wall plug of the invention (T) consists in a cylindrical metal stem with tubular structure, with length higher than the thickness of traditional insulating layers mounted on the front of masonry walls.

Moreover, it is provided with a regularly spaced series of radial holes (2) basically for the entire length.

At the back end designed to be disposed in closer position to the plaster of the installation wall, the stem (1) is provided with a sort of rigid sheath made of plastic materials (3) that covers both the external and internal wall of the stem (1), being permanently fixed to it by means of co-molding.

Such an operation is favored by the presence of said radial holes (2) along the metal stem (1), which act as anchoring points of the plastic molding material (preferably polyamide and similar).

As shown in the aforementioned figures, the sheath (3) is provided at the back end with a flange (4) with higher diameter than the tubular stem (1) and centrally provided with a hole (5) with triangular section that gives access to a rearward cylindrical conduit (6).

Said internal conduit (6) covers most of the length of the sheath (3) up to a transversal partition (7) that closes the front end of the sheath (3) and the internal section of the metal tubular stem (1).

The transversal partition (7) is preferably obtained in one piece with the sheath (3).

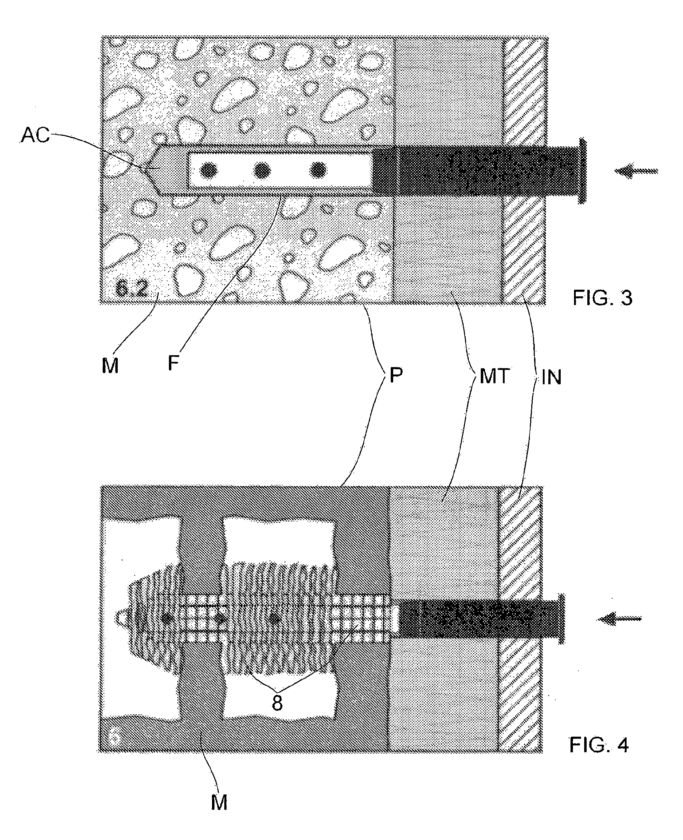

As mentioned above, the installation of such a wall plug (T) requires the drilling on the installation wall (P) of a hole (F) provided with such a length that it ends in the resistant masonry structure (M) after passing through the non-bearing insulating layer (MT); reference is expressly made to fig. 3.

Then a suitable amount of said anchoring agent at fluid state is injected into the hole (F) of the wall (P) and then the metal stem (1) of the wall plug (T) is inserted.

According to said technology, the length of the hole drilled on the wall (P) and the total length of the wall plug (T) are coordinated in such a way that, once insertion has been completed,
- the front metal end of the stem (1) is engaged inside the section of hole (F) obtained in the masonry structure (M)
- the plastic sheath (3) is disposed inside the section of the hole (F) obtained in the insulating layer (MT)
- the flange (4) of the wall plug (T) is flush with the plaster (IN) of the wall (P).

In any case the deep insertion of the wall plug (T) inside the hole (F) allows said chemical anchoring agent (AC) to incorporate the metal stem (1) at the height of the masonry structure (M) using the radial holes (2).

Once the chemical anchoring agent (AC) has set, the wall plug (T) can no longer come out of the wall (P) accidentally; on the contrary, the wall plug (T) is now capable of supporting considerably heavy articles.

The hole (5) provided in the sheath (3) of the wall plug (T) of the invention can be used to hang said articles on the wall.

In fact, the hole (5) can be used to screw an ordinary screw that tends progressively to engage inside said axial conduit (6) and fix the articles to be hung to the wall to the wall plug (T) that is firmly anchored to the wall.

The triangular section of the hole (5) has been studied in order to guarantee the engagement of screws with different sections, starting from a minimum size that basically corresponds to the section of the hole (5).

Moreover, the presence of the transversal partition (7), which closes the front end of the sheath (3) and the internal section of the metal stem (1) at its height, must be noted.

The function of the partition (7) is to prevent the backflow of the chemical anchoring agent (AC) that penetrates inside the tubular stem (1) towards the axial conduit (6) of the sheath (3) during the insertion of the entire wall plug (T) into the hole (F) that is already filled with gluing resin at fluid state.

Finally, referring to fig. 4, it must be noted that the wall plug (T) of the invention sometimes uses the cooperation of a basically cylindrical wired cage (8), especially when the masonry structure (M) is made of perforated bricks.

In such a case, said wired cage (8) is inserted into the section of hole (F) obtained in the masonry wall (M) before injecting the chemical anchoring agent (AC) at fluid state.

Only after positioning such a wired cage (8) the anchoring agent (AC) at fluid state is injected and the cylindrical stem (1) of the plug (T) is inserted inside the hole (F) that contains it.

Therefore, the reason for such a wired cage (8) is to contain said chemical anchoring agent (AC) and prevent uncontrolled dispersion through the large spaces of perforated bricks where the hole (F) is made.

In other words, the preventive installation of said cage (8) expressly avoids wasting said anchoring agent (AC) at fluid state.

Finally, the high efficacy of use of the wall plug of the invention (T) must be noted, also with reference to the capability of being firmly coupled with "non-dedicated" devices that are normally available on the market. Reference is made, for example, to shutter-holding hooks, lamp-holding arms, and similar, which can be mounted on the wall with the wall plug of the invention (T) by simply providing a screw able to engage deeply in said hole (5).

## Claims

1. Wall plug comprising:
- a cylindrical metal stem (1) with tubular structure provided for the entire length with a plurality of radial holes (2),
**characterized in that** it also comprises
- a rigid sheath (3) made of plastic materials permanently fixed on a back section of the tubular stem (1), covering both the external and the internal wall of the tubular stem (1), said rigid sheath (3) provided at the back end with a flange (4) with central hole (5) that gives access to a rearward cylindrical conduit (6) that extends towards the front end of the sheath (3),
- a transversal partition (7) positioned in the front end of the rigid sheath (3) to ensure the closing of said sheath (3) and closes the internal section of the cylindrical stem (1).

2. Wall plug as claimed in claim 1, **characterized in that** the hole (5) obtained in the centre of the flange (4) of the rigid sheath (3) has a triangular section.

3. Wall plug as claimed in claim 1, **characterized in that** the sheath (3) made of rigid plastic materials is co-molded on said cylindrical stem (1).

4. Wall plug as claimed in one or more of the preceding claims, **characterized in that** the rigid sheath (3) is made of polyamide.

5. Wall plug as claimed in any one of the preceding claims, **characterized in that** it is provided with a basically cylindrical wired cage (8) adapted to contain the front end of the tubular stem (1).

6. Wall plug as claimed in any one of the preceding claims, **characterized in that** said transversal partition (7) is obtained in one piece with the rigid sheath (3).

## Patentansprüche

1. Wanddübel umfassend:
- einen zylindrischen Metallschaft (1) mit rohrförmiger Struktur, der im Wesentlichen über die gesamte Länge mit einer Vielzahl von radialen Löchern (2) versehen ist,
**dadurch gekennzeichnet, dass** er ferner Folgendes umfasst:
- eine starre Ummantelung (3) aus Kunststoff, die nicht abnehmbar auf einem hinteren Abschnitt des rohrförmigen Schafts (1) befestigt ist, um sowohl die Außenwand, als auch die Innenwand des rohrförmigen Schafts (1) zu verkleiden, wobei die starre Ummantelung (3) am hinteren Ende mit einem Flansch (4) versehen ist, in dessen Mitte ein Loch (5) vorgesehen ist, durch welches eine dahinter befindliche, im Wesentlichen zylindrische Leitung (6) zugänglich ist, die sich zum vorderen Ende der Ummantelung (3) hin erstreckt,
- eine querlaufende Trennwand (7), die am vorderen Ende der starren Ummantelung (3) angeordnet ist, den Verschluss der Ummantelung (3) gewährleistet und den inneren Abschnitt des zylindrischen Schafts (1) verschließt.

2. Wanddübel nach Anspruch 1, **dadurch gekennzeichnet, dass** das in der Mitte des Flansches (4) der starren Ummantelung (3) befindliche Loch (5) einen dreieckigen Querschnitt aufweist.

3. Wanddübel nach Anspruch 1, **dadurch gekennzeichnet, dass** die Ummantelung (3) aus starrem Kunststoff mittels Co-Spritzgussverfahren auf dem zylindrischen Schaft (1) hergestellt wird.

4. Wanddübel nach einem der vorstehenden Ansprüche, **dadurch gekennzeichnet, dass** die starre Ummantelung (3) aus Polyamid hergestellt ist.

5. Wanddübel nach einem der vorstehenden Ansprüche, **dadurch gekennzeichnet, dass** er mit einem im Wesentlichen zylindrischen Drahtgeflecht (8) versehen ist, das dazu geeignet ist, das vordere Ende des rohrförmigen Schafts (1) aufzunehmen.

6. Wanddübel nach einem der vorstehenden Ansprüche, **dadurch gekennzeichnet, dass** die querlaufende Trennwand (7) einstückig mit der starren Ummantelung (3) hergestellt ist.

## Revendications

1. Tasseau pour paroi comprenant :
- une tige cylindrique métallique (1), de structure tubulaire qui présente, substantiellement sur toute sa longueur, une pluralité de perçages radiaux (2),
**caractérisé en ce qu'**il comprend en outre
- une gaine rigide (3), réalisée en matériaux plastiques, appliquée de manière inamovible sur un segment postérieur de ladite tige tubulaire (1), afin d'en revêtir tant la paroi externe que la paroi interne, ladite gaine rigide (3) terminant à l'arrière par une bride (4) au centre de laquelle est prévu un perçage (5) qui donne accès à un conduit cylindrique (6) positionné derrière la bride et qui se déploie en direction de l'extrémité antérieure de ladite gaine (3),
- un segment transversal (7) disposé à l'extrémité antérieure de la gaine rigide (3) qui assure la fermeture de la gaine (3) et bouche la section interne de ladite tige cylindrique (1).

2. Tasseau pour paroi selon la revendication 1, **caractérisé en ce que** ledit perçage (5) réalisé au centre de la bride (4) de la gaine rigide (3) a une section triangulaire.

3. Tasseau pour paroi selon la revendication 1, **caractérisé en ce que** ladite gaine (3) réalisée en matériaux plastiques est co-moulée sur ladite tige cylindrique (1).

4. Tasseau pour paroi selon une ou plusieurs des revendications précédentes, **caractérisé en ce que** ladite gaine rigide (3) est en polyamide.

5. Tasseau pour paroi selon l'une quelconque des revendications précédentes, **caractérisé en ce qu'**il est équipé d'une petite cage grillagée (8), substantiellement cylindrique, apte à contenir l'extrémité de ladite tige tubulaire (1).

6. Tasseau pour paroi selon l'une quelconque des revendications précédentes, **caractérisé en ce que** ledit segment transversal (7) est réalisé en une seule pièce avec la gaine rigide (3).
